# EUROPEAN PATENT APPLICATION

(11) **EP 4 481 558 A1**
(43) Date of publication of application: **25.12.2024**
(21) Application number: 23856518.8
(22) Date of filing: 16.08.2023
(51) Int. Cl.: G06F 8/61

(54) **METHOD, DEVICE AND SYSTEM FOR ACCESSING APPLICATION VIA DEEPLINK**

(30) Priority: 24.08.2022 CN 202211020687
(71) Applicant: Huawei Technologies Co., Ltd., Shenzhen, Guangdong 518129 (CN)
(72) Inventor: WAN, Duomiao, Shenzhen, Guangdong 518129 (CN)
(74) Representative: Gill Jennings & Every LLP
(86) International application number: PCT/CN2023/113296
(87) International publication number: WO 2024/041428

(57) **Abstract**

This application relates to the field of terminal application technologies, and discloses a method, a device, and a system for accessing an application through a deeplink, to securely and reliably access a specified application page of a target application through a deeplink. In this application, when jumping to an application page based on the deeplink, a terminal device may carry deeplink information when requesting a download server to download an installation file of the target application, so that the download server temporarily stores the deeplink information in the installation file. Then, the installation file into which the deeplink information is written is downloaded to the terminal device. When the terminal device completes installation and starts to start up the application, the terminal device jumps to the specified application page based on the deeplink information read from the installation file. In the foregoing process, because the deeplink information is stored and read in a closed loop in a system, and is not exposed to an external module of the system, the entire process is reliable and secure.

## Description

This application claims priority to Chinese Patent Application No. 202211020687.6, filed with the China National Intellectual Property Administration on August 24, 2022 and entitled "METHOD, DEVICE, AND SYSTEM FOR ACCESSING APPLICATION THROUGH DEEPLINK", which is incorporated herein by reference in its entirety.

### TECHNICAL FIELD

This application relates to the field of terminal application technologies, and in particular, to a method, a device, and a system for accessing an application through a deeplink.

### BACKGROUND

With wide development of mobile internet technologies, there are increasingly more application scenarios of accessing a specified application page based on a deeplink (deeplink) technology, for example, an application (application, APP) page promotion scenario and an application page sharing scenario. The deeplink (deeplink) technology may be used to directly access an internal page (for example, a specified application page) of an installed application through a deeplink.

However, before accessing the specified application page through the deeplink, a terminal device usually stores the deeplink in a clipboard temporarily. The clipboard is a public storage area of a system, and a plurality of processes running in the terminal device have permission to access the clipboard. Consequently, reliability risks, security risks, and the like exist. For example, content in the clipboard may be at risk of being deleted, tampered with, or the like. For another example, sensitive information such as user privacy information and important parameters in the clipboard may be maliciously read.

### SUMMARY

This application provides a method, a device, and a system for accessing an application through a deeplink, to securely and reliably access a specified application page of a target application through a deeplink.

To achieve the foregoing objective, the following technical solutions are used in embodiments of this application.

According to a first aspect, a method for accessing an application through a deeplink is provided. The method includes: A terminal device receives an operation of accessing a deeplink by a user. The terminal device sends a download request to a download server when the terminal device determines that a target application corresponding to the deeplink is not installed in the terminal device, where the download request carries deeplink information, and the download server writes the deeplink information into an installation file of the target application, and sends the installation file of the target application to the terminal device. The terminal device installs and starts up the target application. The terminal device displays a corresponding application page based on the deeplink information in the installation file of the target application. According to the solution provided in the first aspect, when the terminal device jumps to an application page based on the deeplink, if determining that the target application indicated by the deeplink is not installed in the terminal, the terminal device carries the deeplink information when requesting the download server to download the installation file of the target application, so that the download server writes the deeplink information into the installation file, to temporarily store and protect the deeplink information. Then, the installation file into which the deeplink information is written is downloaded to the terminal device. Further, after installing and starting up the application, the terminal device reads, from the installation file, the deeplink information written by the download server, and jumps to a specified application page based on the deeplink information. In the foregoing process, because the deeplink information is stored and read in a closed loop in a system, and is not exposed to an external module of the system, reliability and security of accessing a specified application interface of the target application through the deeplink may be ensured.

In a possible implementation, that the download server writes the deeplink information into an installation file of the target application includes: The download server writes, based on a signing scheme used for the installation file of the target application, the deeplink information into a block corresponding to a preset signing scheme in the installation file of the target application. A specific block for temporarily storing the deeplink information in the installation file of the target application is not limited in this application. For example, the deeplink information may be written into a preset block based on a specific signing scheme used for the installation file. Based on this, it may be ensured that the solutions provided in this application are applicable to application installation files using different signing schemes.

In a possible implementation, the installation file of the target application is in a ZIP file format. For example, the installation file of the target application is an Android package (Android package, APK) file (or referred to as an "APK installation package") in the ZIP file format.

In a possible implementation, the signing scheme used for the installation file of the target application is a V1 signing scheme, and a block corresponding to the preset V1 signing scheme in the installation file of the target application is a comments block. For example, the installation file of the target application is an APK file in the ZIP file format and with the V1 signing scheme, and the block used to temporarily store the deeplink information may be a ZIP comments block.

In a possible implementation, the signing scheme used for the installation file of the target application is a V2/V3 signing scheme, and a block corresponding to the preset V2/V3 signing scheme in the installation file of the target application is a signing block. For example, the installation file of the target application is an APK file in the ZIP file format and with the V2/V3 signing scheme, and the block used to temporarily store the deeplink information may be a Signing Block block.

In a possible implementation, the download server is an application market server. For example, an application market is an application store, or the like.

In a possible implementation, after the terminal device determines that the target application corresponding to the deeplink is not installed in the terminal device, the method further includes: The terminal device displays a second interface, where the second interface includes an option used to trigger downloading of the installation file of the target application; and that the terminal device sends a download request to a download server includes: The terminal device sends the download request to the download server when receiving an operation of triggering downloading of the installation file of the target application by the user on the second interface. Based on this, when the target application indicated by the deeplink is not installed in the terminal device, and the terminal device requests the download server to download the installation file of the target application, the terminal device may jump to an installation file download interface of the target application, so that the user triggers downloading of the installation file of the target application, to prevent a security risk when the terminal device automatically downloads the installation file.

In a possible implementation, that the terminal device receives an operation of accessing a deeplink by a user includes: The terminal device receives the operation of accessing the deeplink by the user on a first interface, where the first interface includes any one of the following interfaces: an instant messaging interface, a notification message interface, an SMS message interface, an application message interface, an activity/advertisement interface, an email interface, and an identification code interface. The solutions provided in this application are applicable to jumping to a specified application page in any deeplink scenario, for example, an application page promotion scenario or an application page sharing scenario.

In a possible implementation, that the terminal device installs and starts up the target application includes: The terminal device installs the target application, and automatically starts up the target application after the target application is installed; or the terminal device installs the target application, and starts up, based on an operation of starting up the target application by the user, the target application after the target application is installed. In the solutions provided in this application, after the target application is installed, the target application may be automatically started up and the specified application page of the target application may be jumped to, or the user may trigger startup of the target application and then the specified application page of the target application may be jumped to.

In a possible implementation, the method further includes: The terminal device receives an operation of accessing a second deeplink by the user. The terminal device determines that a second target application corresponding to the second deeplink is installed in the terminal device. The terminal device displays a corresponding second target application page based on the second deeplink. The foregoing implementation of this application is for a process of jumping to a specified application page when the target application is not installed in the terminal device, namely, a deferred deeplink (deferred deeplink) startup process. When the target application is installed in the terminal device, an interface of the target application may be directly invoked to start up the target application and jump to the specified application page of the target application.

According to a second aspect, a method for accessing an application through a deeplink is provided. The method includes: A terminal device receives an operation of accessing a deeplink by a user. The terminal device sends a download request to a download server when the terminal device determines that a target application corresponding to the deeplink is not installed in the terminal device, where the download request carries deeplink information. The terminal device obtains an installation file of the target application from the download server, where the installation file of the target application carries the deeplink information. The terminal device installs and starts up the target application. The terminal device displays a corresponding application page based on the deeplink information in the installation file of the target application.

According to the solution provided in the second aspect, when the terminal device jumps to an application page based on the deeplink, if determining that the target application indicated by the deeplink is not installed in the terminal, the terminal device carries the deeplink information when requesting the download server to download the installation file of the target application, so that the download server writes the deeplink information into the installation file, to temporarily store and protect the deeplink information. Then, the installation file into which the deeplink information is written is downloaded to the terminal device. Further, after installing and starting up the application, the terminal device reads, from the installation file, the deeplink information written by the download server, and jumps to a specified application page based on the deeplink information. In the foregoing process, because the deeplink information is stored and read in a closed loop in a system, and is not exposed to an external module of the system, reliability and security of accessing a specified application interface of the target application through the deeplink may be ensured.

In a possible implementation, a comments block or a signing block of the installation file of the target application includes the deeplink information. A specific block for temporarily storing the deeplink information in the installation file of the target application is not limited in this application. For example, the deeplink information may be written into a preset block based on a specific signing scheme used for the installation file. Based on this, it may be ensured that the solutions provided in this application are applicable to application installation files using different signing schemes.

In a possible implementation, the installation file of the target application is in a ZIP file format. For example, the installation file of the target application is an APK file in the ZIP file format.

In a possible implementation, a signing scheme used for the installation file of the target application is a V1 signing scheme, and a block corresponding to the preset V1 signing scheme in the installation file of the target application is a comments block. For example, the installation file of the target application is an APK file in the ZIP file format and with the V1 signing scheme, and the block used to temporarily store the deeplink information may be a ZIP comments block.

In a possible implementation, a signing scheme used for the installation file of the target application is a V2/V3 signing scheme, and a block corresponding to the preset V2/V3 signing scheme in the installation file of the target application is a signing block. For example, the installation file of the target application is an APK file in the ZIP file format and with the V2/V3 signing scheme, and the block used to temporarily store the deeplink information may be a Signing Block block.

In a possible implementation, after the terminal device determines that the target application corresponding to the deeplink is not installed in the terminal device, the method further includes: The terminal device displays a second interface, where the second interface includes an option used to trigger downloading of the installation file of the target application; and that the terminal device sends a download request to a download server includes: The terminal device sends the download request to the download server when receiving an operation of triggering downloading of the installation file of the target application by the user on the second interface. Based on this, when the target application indicated by the deeplink is not installed in the terminal device, and the terminal device requests the download server to download the installation file of the target application, the terminal device may jump to an installation file download interface of the target application, so that the user triggers downloading of the installation file of the target application, to prevent a security risk when the terminal device automatically downloads the installation file.

In a possible implementation, that the terminal device receives an operation of accessing a deeplink by a user includes: The terminal device receives the operation of accessing the deeplink by the user on a first interface, where the first interface includes any one of the following interfaces: an instant messaging interface, a notification message interface, an SMS message interface, an application message interface, an activity/advertisement interface, an email interface, and an identification code interface. The solutions provided in this application are applicable to jumping to a specified application page in any deeplink scenario, for example, an application page promotion scenario or an application page sharing scenario.

In a possible implementation, that the terminal device installs and starts up the target application includes: The terminal device installs the target application, and automatically starts up the target application after the target application is installed; or the terminal device installs the target application, and starts up, based on an operation of starting up the target application by the user, the target application after the target application is installed. In the solutions provided in this application, after the target application is installed, the target application may be automatically started up and the specified application page of the target application may be jumped to, or the user may trigger startup of the target application and then the specified application page of the target application may be jumped to.

In a possible implementation, the method further includes: The terminal device receives an operation of accessing a second deeplink by the user. The terminal device determines that a second target application corresponding to the second deeplink is installed in the terminal device. The terminal device displays a corresponding second target application page based on the second deeplink. The foregoing implementation of this application is for a process of jumping to a specified application page when the target application is not installed in the terminal device, namely, a deferred deeplink (deferred deeplink) startup process. When the target application is installed in the terminal device, an interface of the target application may be directly invoked to start up the target application and jump to the specified application page of the target application.

According to a third aspect, a terminal device is provided. The terminal device includes: a user operation detection unit, configured to receive an operation of accessing a deeplink by a user; a communication unit, configured to: send a download request to a download server when a target application is not installed in the terminal device, where the download request carries deeplink information; and obtain an installation file of the target application from the download server, where the installation file of the target application carries the deeplink information; an installation and startup management unit, configured to: install and start up the target application; and jump to a corresponding application page based on the deeplink information in the installation file of the target application; and a display unit, configured to display the application page corresponding to the deeplink information.

According to the solution provided in the third aspect, when the terminal device jumps to an application page based on the deeplink, if determining that the target application indicated by the deeplink is not installed in the terminal, the terminal device carries the deeplink information when requesting the download server to download the installation file of the target application, so that the download server writes the deeplink information into the installation file, to temporarily store and protect the deeplink information. Then, the installation file into which the deeplink information is written is downloaded to the terminal device. Further, after installing and starting up the application, the terminal device reads, from the installation file, the deeplink information written by the download server, and jumps to a specified application page based on the deeplink information. In the foregoing process, because the deeplink information is stored and read in a closed loop in a system, and is not exposed to an external module of the system, reliability and security of accessing a specified application interface of the target application through the deeplink may be ensured.

In a possible implementation, a comments block or a signing block of the installation file of the target application includes the deeplink information. A specific block for temporarily storing the deeplink information in the installation file of the target application is not limited in this application. For example, the deeplink information may be written into a preset block based on a specific signing scheme used for the installation file. Based on this, it may be ensured that the solutions provided in this application are applicable to application installation files using different signing schemes.

In a possible implementation, the user operation detection unit is further configured to receive an operation of accessing a second deeplink by the user. The installation and startup management unit is further configured to display a corresponding second target application page based on the deeplink when the target application is installed in the terminal device.

In a possible implementation, the installation file of the target application is in a ZIP file format. For example, the installation file of the target application is an APK file in the ZIP file format.

In a possible implementation, the signing scheme used for the installation file of the target application is a V1 signing scheme, and a block corresponding to the preset V1 signing scheme in the installation file of the target application is a comments block. For example, the installation file of the target application is an APK file in the ZIP file format and with the V1 signing scheme, and the block used to temporarily store the deeplink information may be a ZIP comments block.

In a possible implementation, the signing scheme used for the installation file of the target application is a V2/V3 signing scheme, and a block corresponding to the preset V2/V3 signing scheme in the installation file of the target application is a signing block. For example, the installation file of the target application is an APK file in the ZIP file format and with the V2/V3 signing scheme, and the block used to temporarily store the deeplink information may be a Signing Block block.

In a possible implementation, the display unit is further configured to display a second interface when the target application corresponding to the deeplink is not installed in the terminal device, where the second interface includes an option used to trigger downloading of the installation file of the target application. The communication unit is specifically configured to send the download request to the download server when the user operation detection unit receives an operation of triggering downloading of the installation file of the target application by the user on the second interface. Based on this, when the target application indicated by the deeplink is not installed in the terminal device, and the terminal device requests the download server to download the installation file of the target application, the terminal device may jump to an installation file download interface of the target application, so that the user triggers downloading of the installation file of the target application, to prevent a security risk when the terminal device automatically downloads the installation file.

In a possible implementation, that the user operation detection unit receives an operation of accessing a deeplink by a user includes: The user operation detection unit receives the operation of accessing the deeplink by the user on a first interface, where the first interface includes any one of the following interfaces: an instant messaging interface, a notification message interface, an SMS message interface, an application message interface, an activity/advertisement interface, an email interface, and an identification code interface. The solutions provided in this application are applicable to jumping to a specified application page in any deeplink scenario, for example, an application page promotion scenario or an application page sharing scenario.

In a possible implementation, that the installation and startup management unit installs and starts up the target application includes: The installation and startup management unit installs the target application, and automatically starts up the target application after the target application is installed; or the installation and startup management unit installs the target application, and starts up, based on an operation of starting up the target application by the user, that is, received by the user operation detection unit, the target application after the target application is installed. In the solutions provided in this application, after the target application is installed, the target application may be automatically started up and the specified application page of the target application may be jumped to, or the user may trigger startup of the target application and then the specified application page of the target application may be jumped to.

In a possible implementation, the installation and startup management unit is further configured to display, based on an operation, of accessing a second deeplink by the user, that is received by the user operation detection unit, a corresponding second target application page when a second target application corresponding to the second deeplink is installed in the terminal device. The foregoing implementation of this application is for a process of jumping to a specified application page when the target application is not installed in the terminal device, namely, a deferred deeplink (deferred deeplink) startup process. When the target application is installed in the terminal device, an interface of the target application may be directly invoked to start up the target application and jump to the specified application page of the target application.

According to a fourth aspect, a terminal device is provided. The terminal device includes: a sensor, configured to detect an input operation (such as a touch operation, a sound instruction, or a preset gesture) of a user; a memory, configured to store computer program instructions; a communication interface, configured to send and receive a signal; and a processor, configured to execute the instructions, so that the terminal device implements the method according to any possible implementation of the second aspect.

According to a fifth aspect, a computer-readable storage medium is provided. The computer-readable storage medium stores computer-readable instructions; and when the computer-readable instructions are executed by a processor, the method according to any possible implementation of the second aspect is implemented.

According to a sixth aspect, a chip system is provided. The chip system includes a processor and a memory. The memory stores instructions; and when the instructions are executed by the processor, the method according to any possible implementation of the second aspect is implemented. The chip system may include a chip, or may include a chip and another discrete device.

According to a seventh aspect, a computer program product is provided. The computer program product includes computer-readable instructions; and when the computer-readable instructions are run on a computer, the method according to any possible implementation of the second aspect is implemented.

### BRIEF DESCRIPTION OF DRAWINGS

FIG. 1 is a schematic diagram 1 of accessing a specified page in an application through a deeplink according to an embodiment of this application;
FIG. 2 is a schematic diagram 2 of accessing a specified page in an application through a deeplink according to an embodiment of this application;
FIG. 3 is a schematic diagram 3 of accessing a specified page in an application through a deeplink according to an embodiment of this application;
FIG. 4 is a schematic diagram of a hardware structure of a terminal device according to an embodiment of this application;
FIG. 5 is a schematic diagram of an interaction process of accessing an application through a deeplink according to an embodiment of this application;
FIG. 6 is a flowchart of accessing an application through a deeplink according to an embodiment of this application;
FIG. 7A and FIG. 7B are a schematic diagram of an interaction process of accessing an application through a deeplink according to an embodiment of this application;
FIG. 8 is a schematic diagram of an application installation process of a terminal device according to an embodiment of this application; and
FIG. 9 is a block diagram of a structure of a terminal device according to an embodiment of this application.

### DESCRIPTION OF EMBODIMENTS

The following describes technical solutions in embodiments of this application with reference to accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, " a plurality of" means "two or more".

In the following descriptions, terms "first" and " second" are merely intended for a purpose of description, and should not be understood as indicating or implying relative importance or implying a quantity of indicated technical features. Therefore, a feature defined with "first" or "second" may explicitly or implicitly include one or more features. In descriptions of embodiments, unless otherwise specified, "a plurality of" means two or more.

It may be understood that a deeplink is a technology of jumping to any interface of an application through a uniform resource identifier (uniform resource identifier, URI) link. Therefore, free jumping between a web page and an application may be implemented based on the deeplink. For example, in embodiments of this application, when an application is accessed based on a deeplink (deeplink) technology, an internal page (for example, a specified application page) of another application may be accessed through a deeplink in an application.

For example, an application page promotion scenario is used as an example. Assuming that an activity/advertisement control on an interface of a first application (for example, a browser) corresponds to a second application (that is, a target application is the second application), a user may access an internal page of the second application by tapping the activity/advertisement control on the interface of the first application. An activity/advertisement control on an interface of the second application is a deeplink.

Alternatively, an application page sharing scenario is used as an example. A user A may share, with a user B in a manner of a deeplink, an application page (for example, an internal page of a second application) that is being browsed by the user A on a terminal device A, so that the user B may access the application page on a terminal device B through the deeplink.

When the application is accessed based on the deeplink (deeplink) technology, there are two cases: one is a case in which an application corresponding to the deeplink (namely, the target application) is installed in a terminal device, and the other is a case in which an application corresponding to the deeplink is not installed in a terminal device.

In some embodiments, if the application corresponding to the deeplink is installed in the terminal device, the deeplink is a link address (which is also referred to as a deeplink address) that can carry custom information and directly jump to an internal page of an installed application. In this case, for example, the terminal device may directly jump from an interface (for example, the interface of the first application) on which the deeplink is located to a specified application page of the target application (for example, the second application) through the deeplink. For example, the first application is a browser, and the interface of the first application is a browser web (web) page.

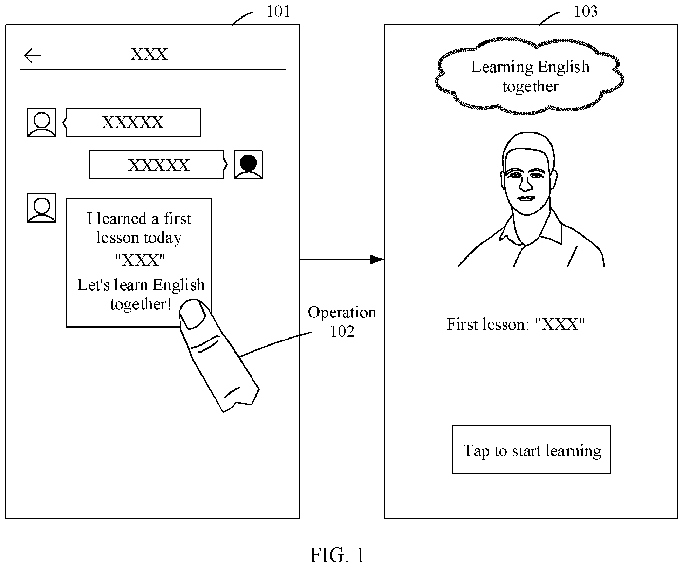

For example, in the application page sharing scenario, the deeplink corresponds to an online learning application, and the online learning application is installed in the terminal device. FIG. 1 is a schematic diagram of accessing a specified page in an application through a deeplink according to an embodiment of this application. As shown in FIG. 1, in response to an operation 102 of tapping, by the user, a deeplink that is about a first lesson of the online learning application and that is sent by a friend on an instant messaging page 101, the terminal device starts up an installed online learning application in a background (a process of starting up the online learning application is not shown in FIG. 1), and directly displays a first lesson page 103 after starting up the online learning application.

In some other embodiments, if the application corresponding to the deeplink is not installed in the terminal device, a deferred deeplink is a link address (which is also referred to as a deferred deeplink address) that can jump to an installation file download page of the application on a premise that the application is not installed in the terminal device, and can carry custom information and jump to an internal page of an installed application when the application is started up for the first time after the application is installed. In this case, for example, the terminal device may first jump from an interface (for example, the interface of the first application) on which the deeplink is located to an installation file download page (for example, a corresponding APP download page in an application store) of the target application (for example, the second application) through the deeplink. Further, when the terminal device downloads, installs, and starts up the target application for the first time, the terminal device may jump to a specified application page of the target application through the deeplink, instead of a home page of the target application. This process is also referred as a deferred deeplink (deferred deeplink) startup process.

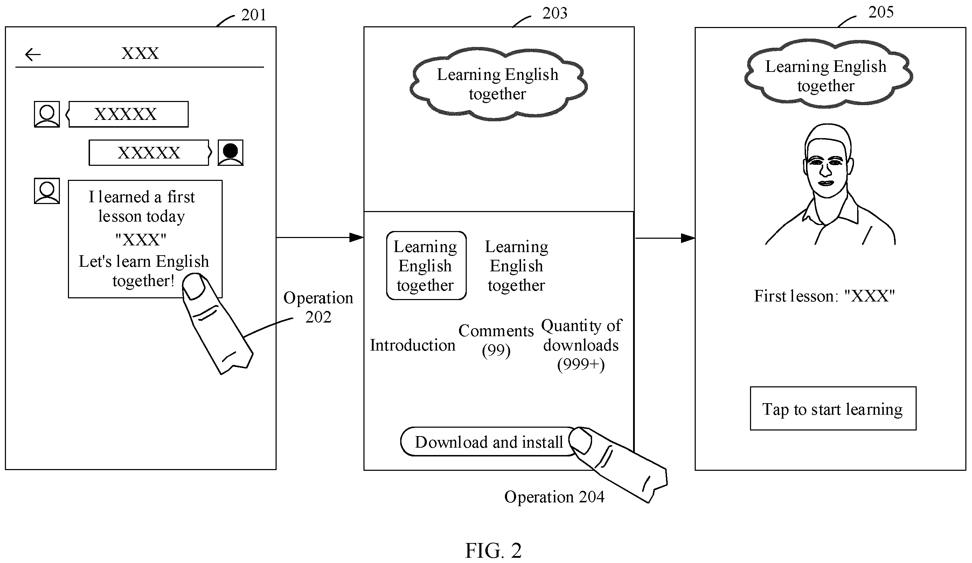

For example, in the application page sharing scenario, the deeplink corresponds to an online learning application, and the online learning application is not installed in the terminal device. FIG. 2 is another schematic diagram of accessing a specified page in an application through a deeplink according to an embodiment of this application. As shown in FIG. 2, in response to an operation 202 of tapping, by the user, a deeplink that is about a first lesson of the online learning application and that is sent by a friend on an instant messaging page 201, the terminal device displays an online learning application download page 203. In response to an operation 204 of downloading and installing an online learning application installation file on the online learning application download page 203 by the user, the terminal device downloads and installs the online learning application. Further, after the online learning application is installed, the terminal device starts up the online learning application and displays a first lesson page 205.

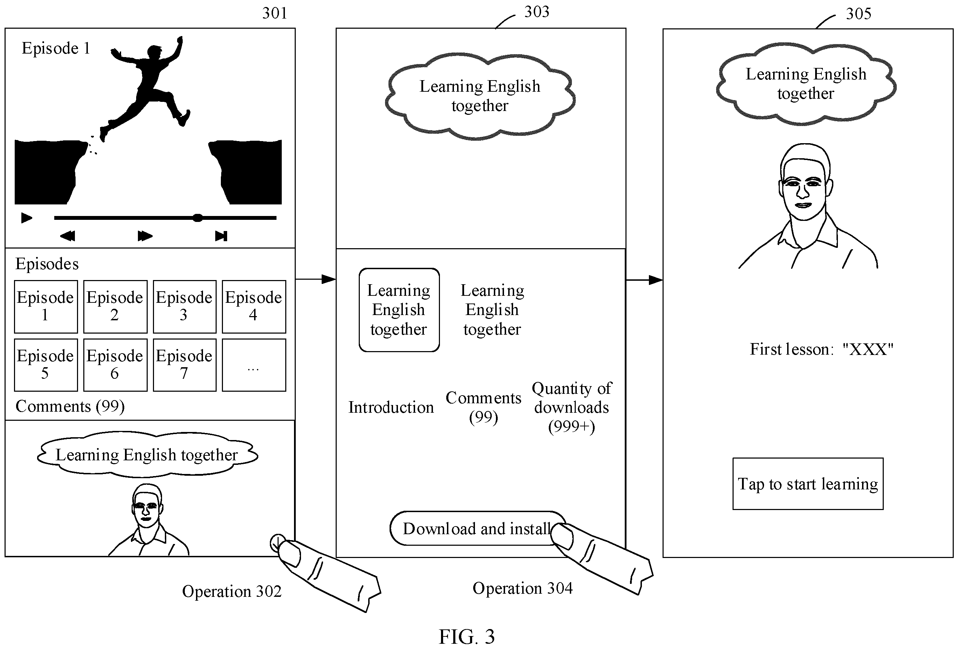

For another example, in the application page promotion scenario, the deeplink corresponds to an online learning application, and the online learning application is not installed in the terminal device. FIG. 3 is another schematic diagram of accessing a specified page in an application through a deeplink according to an embodiment of this application. As shown in FIG. 3, in response to an operation 302 of tapping an online learning lesson promotion control on a video play page 301 of a video application by the user, the terminal device displays an online learning application download page 303. In response to an operation 304 of downloading and installing an online learning application installation file on the online learning application download page 303 by the user, the terminal device downloads and installs the online learning application. Further, after the online learning application is installed, the terminal device starts up the online learning application and displays a first lesson page 305.

The online learning application download page 203 shown in FIG. 2 and the online learning application download page 303 shown in FIG. 3 may be application store pages, or may be pages such as web pages used to download the application. This is not specifically limited in embodiments of this application.

Embodiments of this application are intended to provide a method for accessing an application through a deeplink. The method may be used in a process in which a terminal device accesses an internal page (for example, a specified application page) of an application through a deeplink based on a deeplink (deeplink) technology. Before the application is accessed through the deeplink, the application corresponding to the deeplink is not installed in the terminal device.

For example, the deeplink in embodiments of this application may be a URI. For a deeplink in a URI format, when an internal page of the application is accessed based on the deeplink (deeplink) technology, based on a uniform resource locator (uniform resource locator, URL) scheme, after the URL scheme is parsed to determine the application corresponding to the deeplink and the application is started up, the internal page (for example, the specified application page) of the application is directly jumped to based on information indicated by the deeplink, instead of using a default page technology such as an application home page.

It may be understood that different applications have different schemes. Therefore, the application corresponding to the deeplink may be determined by analyzing a scheme, to perform subsequent access to an application page. Optionally, a scheme of the application may be related to an application interface, an application page path, and the like.

In an example, a URL scheme is an application protocol in the following format: Scheme://host:port/path?query. "Scheme" represents a name of a scheme protocol, "host" represents an address domain on which the scheme acts, "port" represents an interface of the application corresponding to the deeplink, "path" represents a specified page (for example, a specified page path) to be jumped to, and "query" represents a parameter to be transferred.

For example, in embodiments of this application, the terminal device accesses an entry of the specified application page in the application, that is, the deeplink may come from any channel such as an SMS message, a web page, an information flow on an application interface, an email, a message, or a two-dimensional code. This is not limited in embodiments of this application.

In addition, in embodiments of this application, the application accessed by the terminal device through the deeplink may include but is not limited to a social application (for example, WeChat^{®}, QQ^{®} and Weibo), an SMS message application, an email application, a browser application, a shopping application (for example, Taobao^{®}), and a news application (for example, Toutiao^{®}).

The terminal device in embodiments of this application may include but is not limited to a mobile phone (for example, a foldable phone), a netbook, a tablet computer, a vehicle-mounted device, a wearable device (for example, a smartwatch or a smart band), a camera (for example, a single-lens reflex camera or a card camera), a PC (including a desktop computer or a notebook computer), a palmtop computer, a personal digital assistant (personal digital assistant, PDA), a portable multimedia player (portable multimedia player, PMP), a projection device, a smart screen device, an augmented reality (augmented reality, AR)/virtual reality (virtual reality, VR) device, a mixed reality (mixed reality, MR) device, a television set, a motion sensing game console in a human-computer interaction scenario, or the like. A specific function and structure of the terminal device are not limited in this application.

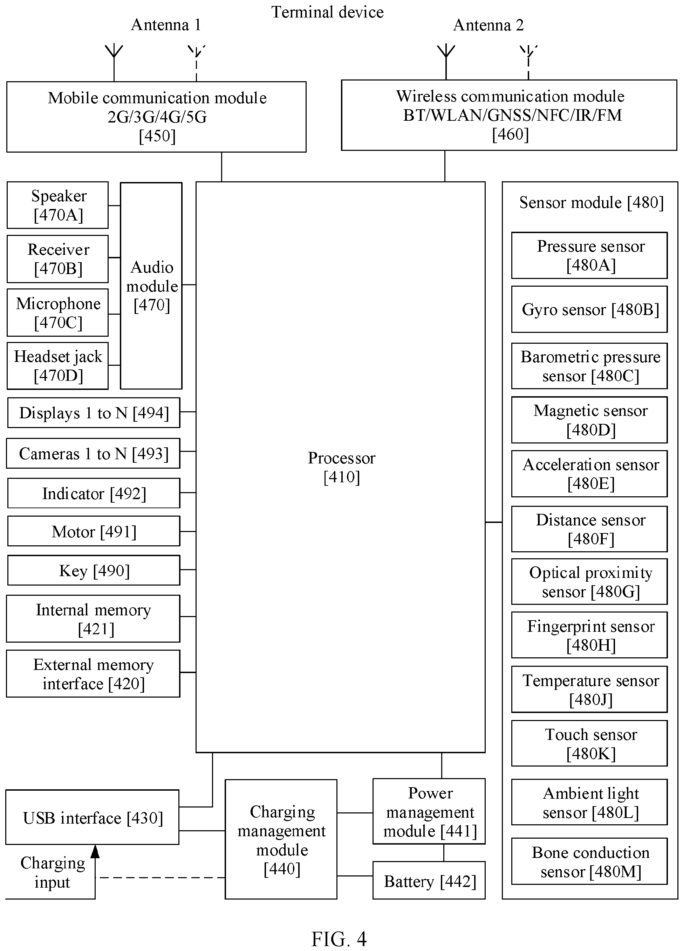

In an example, FIG. 4 is a schematic diagram of a hardware structure of a terminal device according to an embodiment of this application.

As shown in FIG. 4, the terminal device may include a processor 410, an external memory interface 420, an internal memory 421, a universal serial bus (universal serial bus, USB) interface 430, a charging management module 440, a power management module 441, a battery 442, an antenna 1, an antenna 2, a mobile communication module 450, a wireless communication module 460, an audio module 470, a speaker 470A, a receiver 470B, a microphone 470C, a headset jack 470D, a sensor module 480, a key 490, a motor 491, an indicator 492, a camera 493, a display 494, and the like. The sensor module 480 may include a pressure sensor 480A, a gyro sensor 480B, a barometric pressure sensor 480C, a magnetic sensor 480D, an acceleration sensor 480E, a distance sensor 480F, an optical proximity sensor 480G, a fingerprint sensor 480H, a temperature sensor 480J, a touch sensor 480K, an ambient light sensor 480L, a bone conduction sensor 480M, and the like.

It may be understood that, the structure shown in this embodiment of this application does not constitute a specific limitation on the terminal device. In some other embodiments of this application, the terminal device may include more or fewer components than those shown in the figure, or some components may be combined, or some components may be split, or a different component arrangement may be used. The components shown in the figure may be implemented through hardware, software, or a combination of software and hardware.

The processor 410 may include one or more processing units. For example, the processor 410 may include an application processor (application processor, AP), a modem processor, a graphics processing unit (graphics processing unit, GPU), an image signal processor (image signal processor, ISP), an audio processor/digital processor (audio processor), a controller, a memory, a video codec, an audio codec, a digital signal processor (digital signal processor, DSP), a baseband processor, a neural-network processing unit (neural-network processing unit, NPU), and/or the like. Different processing units may be independent devices, or may be integrated into one or more processors

The controller may be a nerve center and a command center of the terminal device. The controller may generate an operation control signal based on an operation code and a time sequence signal of a user operation instruction, to control instruction fetching and instruction execution. For example, a memory may be further disposed in the processor 410, and is configured to store instructions and data. In some embodiments, the memory in the processor 410 is a cache. The memory may store instructions or data that has been used or cyclically used by the processor 410. If the processor 410 needs to use the instructions or the data again, the processor 410 may directly invoke the instructions or the data from the memory. This avoids repeated access and reduces a waiting event of the processor 410. Therefore, system efficiency is improved.

In some embodiments, the processor 410 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module interface, a universal serial bus interface, and/or the like.

The I2C interface is a two-way synchronous serial bus, and includes a serial data line (serial data line, SDA) and a serial clock line (serial clock line, SCL). In some embodiments, the processor 410 may include a plurality of groups of I2C buses. The processor 410 may be separately coupled to the touch sensor 480K, the microphone, the camera 493, and the like through different I2C bus interfaces. For example, the processor 410 may be coupled to the touch sensor 480K through the I2C interface, so that the processor 410 communicates with the touch sensor 480K through the I2C bus interface, to implement a touch function of the terminal device.

In this embodiment of this application, the processor 410 may obtain, through the I2C bus interface, a touch operation that is detected by the touch sensor 480K and that is performed by the user on an interface, such as a tap operation, a touch and hold operation, a preset gesture operation, or a drag operation, to determine a specific intent corresponding to the touch operation, and respond to the touch operation, for example, jumping to an application page.

It may be understood that an interface connection relationship between the modules shown in this embodiment of this application is merely an example for description, and does not constitute a limitation on a structure of the terminal device. In some other embodiments of this application, the terminal device may alternatively use an interface connection manner different from that in the foregoing embodiments or a combination of a plurality of interface connection manners.

The charging management module 440 is configured to receive a charging input from a charger. The power management module 441 is configured to connect to the battery 442, the charging management module 440, and the processor 410. The power management module 441 receives an input from the battery 442 and/or the charging management module 440, and supplies power to the processor 410, the internal memory 421, an external memory, the display 494, the camera 493, the wireless communication module 460, and the like.

A wireless communication function of the terminal device may be implemented through the antenna 1, the antenna 2, the mobile communication module 450, the wireless communication module 460, the modem processor, the baseband processor, and the like.

The antenna 1 and the antenna 2 are configured to transmit and receive an electromagnetic wave signal. Each antenna in the terminal device may be configured to cover one or more communication frequency bands. Different antennas may also be multiplexed to improve antenna utilization. The mobile communication module 450 may provide a solution, applied to the terminal device, to wireless communication including 2G, 3G, 4G, 5G, and the like.

In this embodiment of this application, the terminal device may receive information, such as a deeplink, from another device through the antenna 1 and/or the antenna 2.

In some embodiments of this application, the terminal device may send a correspondence between the deeplink and identification information of the terminal device to an application store server through the antenna 1 and/or the antenna 2.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. The wireless communication module 460 may provide a wireless communication solution applied to the terminal device, that includes a wireless local area network (wireless local area network, WLAN) (for example, a wireless fidelity (wireless fidelity, Wi-Fi) network), Bluetooth (Bluetooth, BT), a BeiDou navigation satellite system (BeiDou navigation satellite system, BDS), a global navigation satellite system (global navigation satellite system, GNSS), frequency modulation (frequency modulation, FM), a near field wireless communication (near field communication, NFC) technology, an infrared (infrared, IR) technology, and the like.

The terminal device implements a display function through a graphics processing unit (graphics processing unit, GPU), the display 494, an application processor, and the like. The GPU is a microprocessor for image processing, and is connected to the display 494 and the application processor. The GPU is configured to perform data and geometric computation, and render an image. The processor 410 may include one or more GPUs. The one or more GPUs execute program instructions to generate or change display information.

The display 494 is configured to display an image, a video, and the like. The display 494 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flex light-emitting diode (flex light-emitting diode, FLED), a quantum dot light-emitting diode (quantum dot light-emitting diode, QLED), or the like.

In this embodiment of this application, the GPU may be configured to render an interface. The display 494 may be configured to display an interface. For example, the interface may include but is not limited to an interface such as an application interface (for example, a browser interface, an office application interface, an email interface, a news application interface, or a social application interface), a function interface, or an applet interface.

The terminal device may implement a photographing function through an image signal processor (image signal processor, ISP), the camera 493, the video codec, the GPU, the display 494, the application processor, and the like. In this application, the camera 493 may include a front-facing camera and a rear-facing camera of the terminal device, and may be an optical zoom lens or the like. This is not limited in this application.

In some embodiments, the ISP may be disposed in the camera 493. This is not limited in this application.

The digital signal processor is configured to process digital signals, and may process other digital signals in addition to digital image signals. For example, when the terminal device selects a frequency, the digital signal processor is configured to perform Fourier transform on frequency energy.

The video codec is configured to compress or decompress a digital video. The terminal device may support one or more video codecs. In this way, the terminal device may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information based on a structure of a biological neural network, for example, based on a transfer mode between human brain neurons; and may further continuously perform self-learning. Applications such as intelligent cognition of the terminal device, for example, image recognition, facial recognition, voice recognition, and text understanding, may be implemented through the NPU.

The external memory interface 420 may be configured to connect to an external memory card, for example, a micro SD card, to extend a storage capability of the terminal device. The external memory card communicates with the processor 410 through the external memory interface 420, to implement a data storage function. For example, a file such as audio or a video is stored in the external memory card.

The internal memory 421 may be configured to store executable program code of a computer program. For example, the computer program may include an operating system program and an application program. The operating system may include but is not limited to an operating system such as Symbian^{®} (Symbian^{®}), Android^{®} (Android^{®}), Microsoft^{®} Windows^{®}, Apple iOS^{®}, Blackberry^{®} (Blackberry^{®}), or Harmony^{®} (Harmony^{®}) OS. The executable program code includes instructions. The processor 410 runs the instructions stored in the internal memory 421, to perform various functional applications in the terminal device and data processing. The internal memory 421 may include a program storage area and data storage. The program storage area may store an operating system, an application program required by at least one function, and the like A data storage area may store data (for example, application cache data) created in a process of using the terminal device. In addition, the internal memory 421 may include a high-speed random access memory, and may further include a non-volatile memory, for example, at least one magnetic disk storage device, a flash memory device, or a universal flash storage (universal flash storage, UFS).

The terminal device may implement an audio function, for example, audio playing or recording through the audio module 470, the speaker 470A, the receiver 470B, the microphone 470C, the headset jack 470D, the application processor, and the like.

The touch sensor 480K is also referred to as a "touch panel". The touch sensor 480K may be disposed on the display 494, and the touch sensor 480K and the display 494 constitute a touchscreen. The touch sensor 480K is configured to detect a touch operation performed on or near the touch sensor 480K. The touch sensor may transfer a detected touch operation (including information such as a touch location, a touch strength, a contact area, and touch duration) to a processor, to determine a touch event type. A visual output related to the touch operation may be provided through the display 494. In some other embodiments, the touch sensor 480K may alternatively be disposed on a surface of the terminal device at a location different from that of the display 494.

In this embodiment of this application, the touch operation detected by the touch sensor 480K may be an operation performed by the user on or near the touchscreen by using a finger, or may be an operation performed by the user on or near the touchscreen through a touch auxiliary tool such as a stylus, a stylus pen, or a touch ball. This is not limited in this application.

It may be understood that, the structure shown in this embodiment of this application does not constitute a specific limitation on the terminal device. In some other embodiments of this application, the terminal device may include more or fewer components than those shown in the figure, or some components may be combined, or some components may be split, or a different component arrangement may be used. The components shown in the figure may be implemented through hardware, software, or a combination of software and hardware.

In a process of accessing an application through a deeplink, to ensure that a terminal device can directly jump to an internal page (for example, a specified application page) of a corresponding application after downloading an application installation file and installing and starting up an application, in some embodiments, the terminal device may temporarily store deeplink information in a clipboard of the terminal device in a process of downloading the application installation file and installing and starting up the application. After downloading the application installation file and installing and starting up the application, the application may read the deeplink information from the clipboard, and jump to the internal page of the corresponding application by using the deeplink information. The deeplink information is, for example, a deferred deeplink address. For example, the deeplink information includes an application identifier and a specific identifier. The application identifier is used to uniquely identify an application indicated by the deeplink. The specific identifier is used to uniquely identify an application page (namely, the specified application page) indicated by the deeplink. In an example, the specific identifier may be represented by a location indicator.

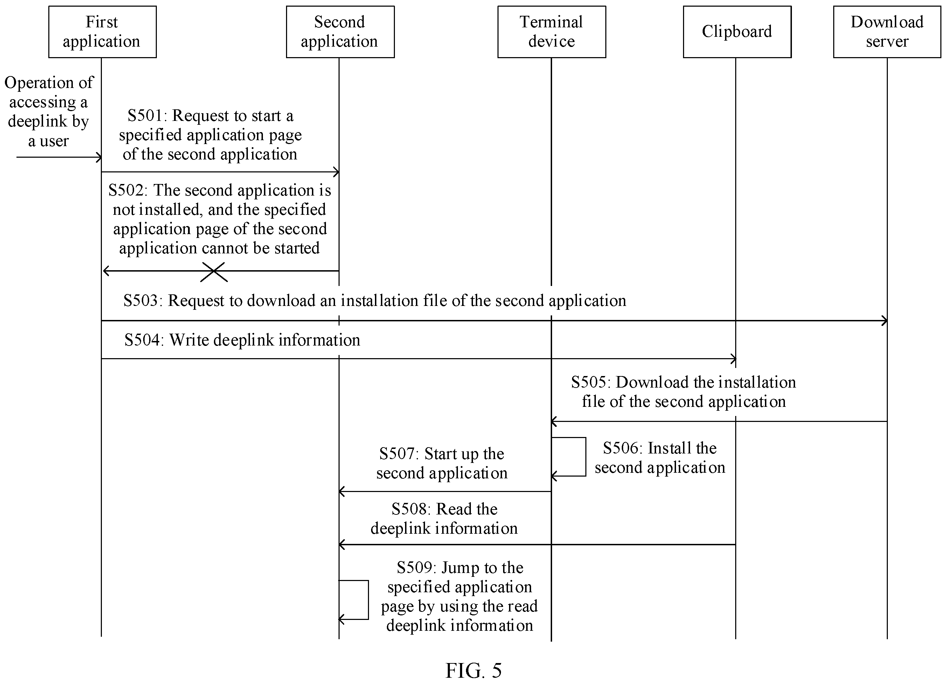

For example, FIG. 5 is a schematic diagram of an interaction process of accessing an application through a deeplink according to an embodiment of this application by using an example in which a deeplink corresponds to a second application (that is, a target application is the second application) and deeplink information is temporarily stored in a clipboard.

As shown in S501 in FIG. 5, in response to receiving an operation of accessing the deeplink by a user (for example, an operation of tapping the deeplink by the user), a first application (for example, a browser) requests to start a specified application page of the second application. However, because the second application is not installed in a terminal device, as shown in S502 in FIG. 5, the first application cannot start the specified application page of the second application. In the case, as shown in S503 in FIG. 5, the first application requests a download server (for example, an application store) to download an installation file of the second application. In addition, as shown in S504 in FIG. 5, the first application writes the deeplink information into the clipboard, to temporarily store link data in the clipboard. Then, as shown in S505 in FIG. 5, the terminal device downloads the installation file of the second application from the download server. After the terminal device downloads the installation file of the second application, as shown in S506 in FIG. 5, the terminal device installs the second application, and starts up the second application after the second application is installed (as shown in S507 in FIG. 5). After the second application is started up, as shown in S508 in FIG. 5, the second application reads, from the clipboard, the deeplink information previously written into the clipboard, and jumps to the specified application page by using the read deeplink information (as shown in S509 in FIG. 5).

As shown in FIG. 5, the first application requests to start the second application based on the deeplink. For a deeplink in a URI format, the first application may determine, by using a capability of parsing a URL scheme provided by an operating system, an interface of an application corresponding to the deeplink, and invoke the interface to start up the application; and directly jump, based on a specified page path corresponding to the deeplink, to a specified application page corresponding to the path.

It may be understood that, in the method for accessing the application through the deeplink shown in FIG. 5, in a process of downloading the application installation file and installing and starting up the application, the deeplink information is temporarily stored in the clipboard, so that after downloading the application installation file and installing and starting up the application, the terminal device may directly jump to the specified application page, to ensure that the specified application page is successfully accessed through the deeplink.

However, in the method for accessing the application through the deeplink shown in FIG. 5, a temporary storage location, namely, the clipboard, of the deeplink information is a public storage area of a system. The storage area may be accessed by a plurality of processes running in the terminal device. Consequently, reliability and security risks exist. For example, content in the clipboard is at risk of being deleted, tampered with, or the like. For another example, sensitive information such as user privacy information and important parameters in the clipboard may be maliciously read.

To resolve the foregoing problems existing in a conventional deeplink technology, an embodiment of this application provides a method for accessing an application through a deeplink. According to the method, deeplink access may be successfully completed while security (for example, not being maliciously read) and reliability (for example, not being deleted or tampered with) of the deeplink are ensured.

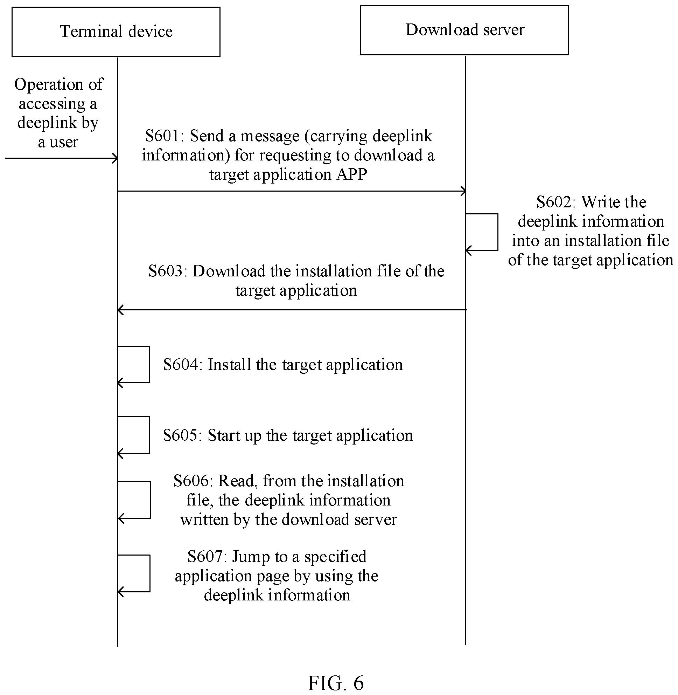

For example, FIG. 6 is a flowchart of accessing an application through a deeplink according to an embodiment of this application.

As shown in S601 in FIG. 6, when receiving an operation of accessing a deeplink by a user (for example, an operation of tapping the deeplink by the user), a terminal device may send, to a download server (for example, an application store), a message for requesting to download an installation file of a target application, where the message for requesting to download the installation file of the target application carries deeplink information. As shown in S602 in FIG. 6, after receiving the deeplink information, the download server writes the deeplink information into the installation file of the target application. After the terminal device downloads the installation file of the target application from the download server (as shown in S603 in FIG. 6) and installs the target application (as shown in S604 in FIG. 6), as shown in S605 in FIG. 6, the terminal device starts up the target application. After the terminal device starts up the target application, as shown in S606 in FIG. 6, the terminal device reads, from the installation file, the deeplink information written by the download server, and jumps to a specified application page based on the deeplink information (as shown in S607 in FIG. 6). Based on this, reliability and security of accessing the specified application page of the target application through the deeplink may be ensured.

In an example, after receiving the deeplink information from the terminal device, the download server (for example, an application store) may write the deeplink information into a comments block in the installation file of the target application.

In another example, after receiving the deeplink information from the terminal device, the download server (for example, an application store) may write the deeplink information into a signing block in the installation file of the target application.

The download server (for example, the application store) may provide an interconnection application that may be pre-installed in the terminal device for the user. The download server (for example, the application store) further includes the application installation file and information such as a function introduction, an interface display, usage descriptions, version information, evaluation information, an installation requirement, and an application permission. In response to a download request of the terminal device, the download server (for example, the application store) may send, to the terminal device, data (for example, an installation package) used to install an application. A process in which the download server sends, to the terminal device, the data (for example, the installation package) used to install the application is a process in which the terminal device downloads the application installation file.

For example, an operating system of the terminal device is an Android^{®} (Android^{®}) operating system, and the application installation file may generally be an Android package (Android package, APK) file (or referred to as an "APK installation package"). In a possible example, a data format of the APK installation package may be a compressed (for example, ZIP) file format.

For example, when an APK installation package in the ZIP file format is used to divide the APK installation package into blocks, an APK installation package based on a V1 signing scheme may include a Contents of ZIP entries block and a ZIP comments block shown in Table 1, and an APK installation package based on a V2/V3 signing scheme may include a Contents of ZIP entries block, a Signing Block block, a Central Directory block, and an End of Central Directory block shown in Table 2.

**Table 1**

| | |
|---|---|
| Contents of ZIP entries | ZIP comments |

**Table 2**

| | | | |
|---|---|---|---|
| Contents of ZIP entries | Signing Block | Central Directory | End of Central Directory |

For a V1 signature, the ZIP comments block is generally an extension block (or an extension field) of a ZIP file, and the extension block (or the extension field) may generally be used to record an additional attribute of the file, record remark information, or the like. This is not limited in this embodiment of this application. For the V1 signature, the deeplink information is stored in the ZIP comments block. For a V2/V3 signature, the deeplink information is stored in the Signing Block block.

In this embodiment of this application, after receiving the deeplink information from the terminal device, the download server (for example, the application store) may write the deeplink information into the APK installation package of the target application. For example, for the Version 1.0 signature, the download server may write the deeplink information into the ZIP comments block (namely, a comments block) of the APK installation package; and for the Version 2.0 signature, the download server may write the deeplink information into the Signing Block (signing block) of the APK installation package. When the terminal device starts up the target application after the target application is installed, the terminal device reads, from a corresponding block of the APK installation package, the deeplink information written by the download server, and jumps to the specified application page based on the deeplink information. According to the method, because the deeplink information is stored and read in a closed loop in a system, and is not exposed to an external module of the system, reliability and security of accessing the specified application page of the target application through the deeplink may be ensured.

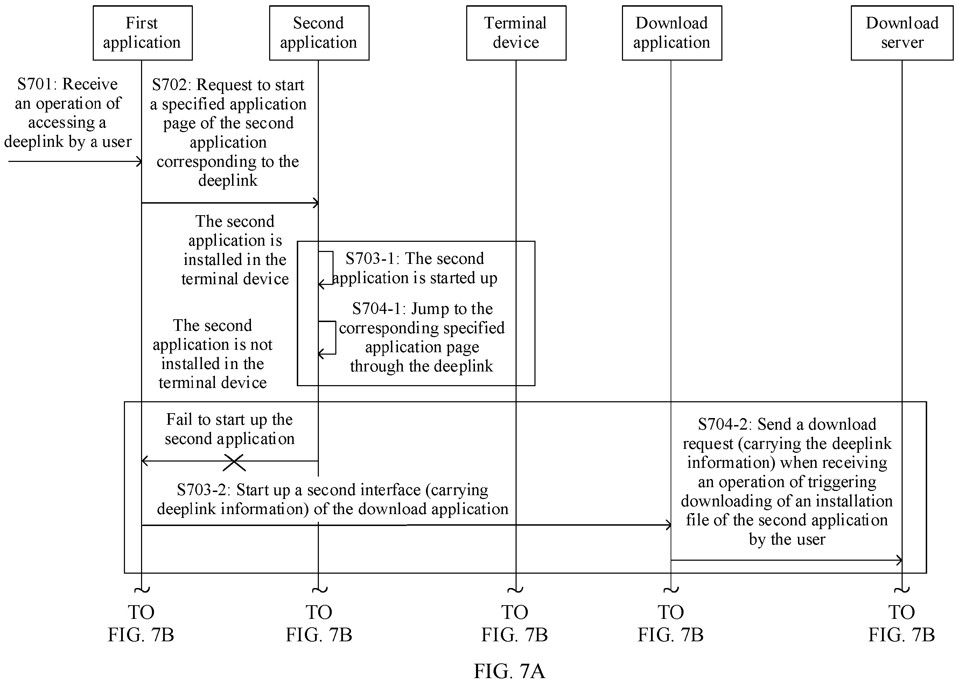

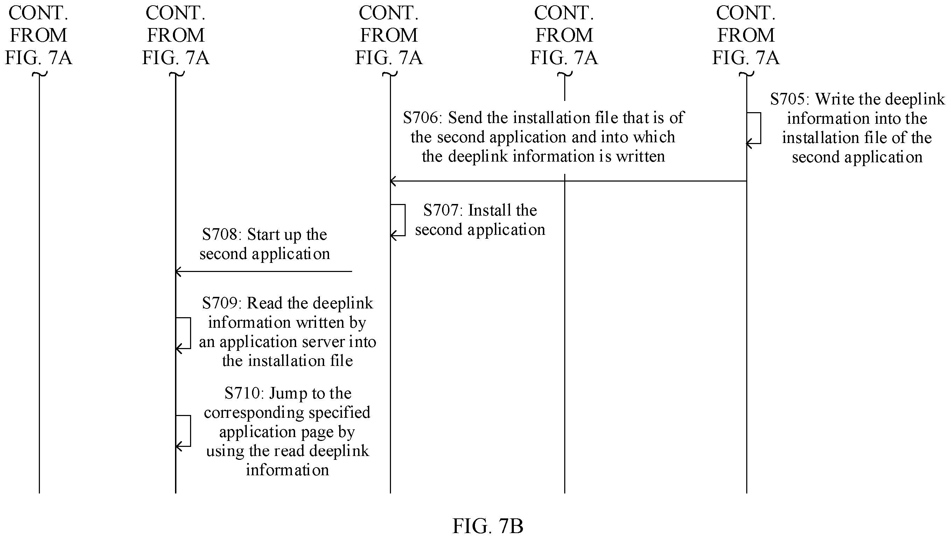

FIG. 7A and FIG. 7B are a schematic diagram of an interaction process of accessing an application through a deeplink according to an embodiment of this application by using an example in which deeplink information is temporarily stored in an installation file of a target application.

As shown in FIG. 7A and FIG. 7B, the method for accessing the application through the deeplink provided in this embodiment of this application may include S701 and S702, and S703-1 and 5704-1, or include S701 and S702, S703-2, S704-2, and S705 to S710.

S701: A first application receives an operation of accessing a deeplink by a user.

For example, the operation of accessing the deeplink by the user may be an operation of tapping the deeplink by the user on a first interface of the first application. The deeplink on the first interface corresponds to a second application, that is, the target application is the second application.

For example, the first interface of the first application may be an instant messaging interface, a notification message interface, an SMS message interface, an application message interface, an activity/advertisement promotion page, an email interface, an identification code interface, or the like. The deeplink may be a link address, a control, an identification code, or the like on the first interface. This is not limited in this embodiment of this application.

The deeplink carries an application identifier and a specific identifier. The application identifier is used to uniquely identify an application (namely, the second application) indicated by the deeplink. The specific identifier is used to uniquely identify an application page (namely, the specified application page) indicated by the deeplink. In an example, the specific identifier may be represented by a location indicator.

For example, the second application may include but is not limited to a social application (for example, WeChat^{®}, QQ^{®} and Weibo), an SMS message application, an email application, a browser application, a shopping application (for example, Taobao^{®}), and a news application (for example, Toutiao^{®}).

For example, the operation of accessing the deeplink by the user is, for example, an operation of tapping (for example, tapping or double-tapping) the deeplink by the user on the first interface, an operation of scanning the deeplink in a form of an identification code by the user, an operation of touching and holding the deeplink by the user on the first interface, and an operation of selecting to access the deeplink after touching and holding the deeplink by the user on the first interface. Alternatively, the operation of accessing the deeplink by the user may be a preset slide operation, a voice operation, a preset gesture operation, a preset physical key operation, a preset virtual key operation, or the like. This is not limited in this embodiment of this application, and is determined based on a specific interface function and/or a terminal device configuration.

S702: The first application requests to start a specified application page of the second application corresponding to the deeplink.

When the first application requests to start the specified application page of the second application corresponding to the deeplink, the first application carries the deeplink information.

For example, the first application may invoke an interface of the second application corresponding to the deeplink, to attempt to start up the second application.

In some embodiments, as shown in FIG. 7A and FIG. 7B, if the second application is installed in a terminal device, S703-1 and S704-1 shown in FIG. 7A are further performed.

S703-1: The second application is started up.

S704-1: The second application jumps to the corresponding specified application page through the deeplink.

For example, the second application may directly jump, based on a specified page path corresponding to the deeplink, to a specified application page corresponding to the path.

In some other embodiments, as shown in FIG. 7A and FIG. 7B, if the second application is not installed in the terminal device, S703-2, S704-2, and S705 to S710 shown in FIG. 7A and FIG. 7B are further performed.

S703-2: The first application starts up a second interface of a download application.

When the first application starts up the second interface of the download application, the first application also carries the deeplink information.

The second interface includes an option used to trigger downloading of an installation file of the second application. The second interface is used by the user to perform an application download operation. For example, the second interface is an application download interface, for example, an application store interface. The second interface includes the option used to trigger downloading of the installation file of the second application, for example, a download button or an installation button.

For example, the second interface may include but is not limited to a function introduction, an interface display, usage descriptions, version information, evaluation information, an installation requirement, and an application permission of the second application.

It should be noted that if the second application is not installed in the terminal device, the first application may automatically start up the second interface, or may start up the second interface based on an operation of the user. This is not limited in this embodiment of this application.

S704-2: The download application sends a download request to a download server when receiving an operation of triggering downloading of the installation file of the second application by the user, where the download request carries the deeplink information.

The download request is used to request the installation file of the second application.

The deeplink information is, for example, a deferred deeplink address. For example, the deeplink information includes the application identifier and the specific identifier

For example, the operation of triggering downloading of the installation file of the second application by the user is an operation of selecting, by the user on a first interface of the download application, an option used to trigger downloading of the installation file of the second application. Alternatively, the operation of triggering downloading of the installation file of the second application by the user may be the preset slide operation, the voice operation, the preset gesture operation, the preset physical key operation, the preset virtual key operation, or the like. This is not limited in this embodiment of this application, and is determined based on the specific interface function and/or the terminal device configuration.

In this embodiment of this application, the download application may send the download request to the download server based on a standard communication technology and/or protocol, for example, a communication protocol such as a hypertext transfer protocol (hypertext transfer protocol, HTTP) or a transmission control/internet protocol (transmission control protocol/internet protocol, TCP/IP). For details, refer to the conventional technology herein.

For example, the terminal device sends the download request to the download server based on the HTTP. In a possible implementation, the terminal device may carry the deeplink information by using an extension header field of an HTTP packet.

In another possible implementation, the terminal device may carry the deeplink information by using a body (body) of an HTTP packet.

Further, optionally, to ensure reliability and security of the deeplink information, the terminal device may sign or encrypt the body (body) of the HTTP packet, to prevent sensitive information or important information in the deeplink information from being deleted, tampered with, or maliciously read.

S705: The download server writes the deeplink information into the installation file of the second application.

For example, the download server may write the deeplink information into a corresponding preset file based on a specific signing scheme used for the installation file of the second application.

In some embodiments, assuming that the signing scheme used for the installation file of the second application is a V1 signing scheme, the download server may write the deeplink information into a comments block (ZIP comments shown in Table 1) of the installation file.

In some other embodiments, assuming that the signing scheme used for the installation file of the second application is a V2/V3 signing scheme, the download server may write the deeplink information into a signing block (Signing Block shown in Table 2) of the installation file.

S706: The download server sends, to the terminal device, the installation file that is of the second application and into which the deeplink information is written.

S707: The terminal device installs the second application.

For example, an operating system of the terminal device is an Android^{®} operating system. In an example, the terminal device may invoke an installation and startup management unit to install the second application.

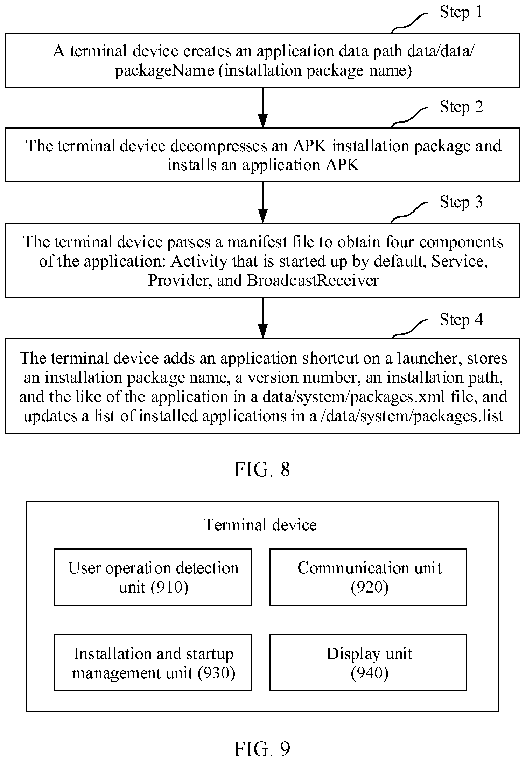

For example, the installation file is an APK installation package. In an example, FIG. 8 is a schematic diagram of an application installation process of a terminal device according to an embodiment of this application.

As shown in FIG. 8, a process of installing an application APK installation package by the terminal device mainly includes the following steps 1 to 4.

Step 1: The terminal device creates an application data path data/data/packageName (installation package name).

An application data directory is mainly used to store data such as a database, an xml file, and an so file.

Step 2: The terminal device decompresses the APK installation package and installs an application APK.

In an example, after decompressing the APK installation package, the terminal device checks an APK signing file, to determine whether the terminal device has permission to install the APK.

Step 3: The terminal device parses a manifest file to obtain four components of the application: Activity (Activity) that is started up by default, Service (Service), Provider, and BroadcastReceiver.

Step 4: The terminal device adds an application shortcut (for example, an application icon) on a launcher, stores an installation package name, a version number, an installation path, and the like of the application in a data/system/packages.xml file, and updates a list of installed applications in a /data/system/packages.list.

The terminal device stores information such as the installation package name, the version number, the installation path, and the like of the application in the data/system/packages.xml file for use during next installation.

It should be noted that the process of installing the application APK installation package by the terminal device shown in FIG. 8 is merely used as an example, and is not limited in this embodiment of this application. For a specific process of installing an application by the terminal device and descriptions of a related module, refer to the conventional technology. Details are not described herein.

S708: The terminal device starts up the second application.

In an example, the installation and startup management unit of the terminal device may automatically start up the second application after the second application is installed.

In another example, the installation and startup management unit of the terminal device may start up the second application based on an operation of starting up the second application by the user (for example, an operation of tapping an application icon of the second application by the user) after the second application is installed.

S709: The second application reads the deeplink information written by an application server into the installation file.

For example, the terminal device may read the deeplink information written by the application server from a corresponding file of the installation file based on the specific signing scheme used for the installation file of the second application.

In this embodiment of this application, after the second application is started up, the second application may execute pre-written instructions, and read information in the installation file based on the signing scheme used for the installation file.

For example, the second application may obtain the installation file (for example, the APK installation package) of the second application from an installation path of an application program, and read the deeplink information written by the application server into the installation file. The deeplink information may be located in a Contents of ZIP entries block and a ZIP comments block in the APK installation package. This is determined based on the specific signing scheme of the APK installation package.

In some embodiments, assuming that the signing scheme used for the installation file of the second application is the V1 signing scheme, the terminal device may read the comments block (ZIP comments shown in Table 1) of the installation file to obtain the deeplink information.

In some other embodiments, assuming that the signing scheme used for the installation file of the second application is the V2/V3 signing scheme, the terminal device may read the signing block (Signing Block shown in Table 2) of the installation file to obtain the deeplink information.

S710: The second application jumps to the corresponding specified application page by using the read deeplink information.

For example, the terminal device may invoke a corresponding intent based on the read deeplink information to initiate a corresponding activity (activity) of the second application, and map the corresponding activity of the second application to corresponding page navigation of the application based on a specific identifier in the deeplink information, to display an application page (namely, the specified application page) indicated by the deeplink information.

It may be understood that, according to the method for accessing the application through the deeplink provided in embodiments of this application, when the terminal device jumps to the application page based on the deeplink, if determining that the target application indicated by the deeplink is not installed in the terminal, the terminal device carries the deeplink information when requesting the download server (for example, an application store) to download the installation file of the target application, so that the download server writes the deeplink information into the installation file, to temporarily store and protect the deeplink information. Then, the installation file into which the deeplink information is written is downloaded to the terminal device. Further, after installing and starting up the application, the terminal device reads, from the installation file, the deeplink information written by the download server, and jumps to the specified application page based on the deeplink information. In the foregoing process, because the deeplink information is stored and read in a closed loop in a system, and is not exposed to an external module of the system, reliability and security of accessing a specified application interface of the target application through the deeplink may be ensured.

It should be understood that the solutions in embodiments of this application may be properly combined for use, and explanations or descriptions of terms in embodiments may be cross-referenced or explained in embodiments. This is not limited.

It should be further understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

It may be understood that, to implement functions of any one of the foregoing embodiments, the terminal device includes a corresponding hardware structure and/or software module for performing the functions. A person skilled in the art should be easily aware that, with reference to units and algorithm steps in the examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device may be divided into functional modules. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, division into modules is an example, and is merely a logical function division. During actual implementation, another division manner may be used.

For example, as shown in FIG. 9, a terminal device may include a user operation detection unit 910, a communication unit 920, an installation and startup management unit 930, and a display unit 940.

The user operation detection unit 910 is configured to support the terminal device in detecting an input operation of a user, for example, an operation of accessing a deeplink by the user, an operation of triggering downloading of an installation file of a target application, and an operation of starting up the target application by the user. The communication unit 920 is configured to support the terminal device in communicating with another device/apparatus, for example, downloading the installation file of the target application from a download server. The installation and startup management unit 930 is configured to support the terminal device in installing the target application, starting up the target application, and jumping to an application page. The display unit 940 is configured to support the terminal device in displaying an interface, for example, displaying a specified application page of the target application, displaying a second interface including an option used to trigger downloading of the installation file of the target application, and displaying a first interface including the deeplink.

It should be further understood that each module in the terminal device may be implemented in a form of software and/or hardware. This is not specifically limited herein. In other words, the terminal device is presented in a form of a functional module. The "module" herein may be an application-specific integrated circuit (ASIC), a circuit, a processor and a memory that execute one or more software or firmware programs, an integrated logic circuit, and/or another device that may provide the foregoing functions.

In an optional manner, when software is used for implementing data transmission, the data transmission may be completely or partially implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, or microwave). The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid state disk (SSD)), or the like.

Method or algorithm steps described in combination with embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM, or a storage medium in any other form well-known in the art. For example, the storage medium is coupled to the processor, so that the processor can read information from the storage medium, and write information into the storage medium. Certainly, the storage medium may alternatively be a component of the processor. The processor and the storage medium may be located in the ASIC. In addition, the ASIC may be located in an electronic device. Certainly, the processor and the storage medium may exist in the terminal device as discrete components.

Based on the descriptions of the implementations, a person skilled in the art may clearly understand that for a purpose of convenient and brief descriptions, division into the functional modules is merely used as an example for description. During actual application, the functions may be allocated to different functional modules for implementation based on a requirement. In other words, an inner structure of an apparatus is divided into different functional modules, to implement all or a part of the foregoing described functions.

## Claims

1. A method for accessing an application through a deeplink, wherein the method comprises:
receiving, by a terminal device, an operation of accessing a deeplink by a user;
determining, by the terminal device, that a target application corresponding to the deeplink is not installed in the terminal device;
sending, by the terminal device, a download request to a download server, wherein the download request carries deeplink information;
obtaining, by the terminal device, an installation file of the target application from the download server, wherein the installation file of the target application carries the deeplink information;
installing and starting up, by the terminal device, the target application; and
obtaining, by the terminal device, the deeplink information in the installation file of the target application, and displaying a corresponding application page based on the deeplink information.

2. The method according to claim 1, wherein a comments block or a signing block of the installation file of the target application comprises the deeplink information.

3. The method according to claim 2, wherein a signing scheme used for the installation file of the target application is a V1 signing scheme, and the comments block of the installation file of the target application comprises the deeplink information.

4. The method according to claim 2, wherein a signing scheme used for the installation file of the target application is a V2/V3 signing scheme, and the signing block of the installation file of the target application comprises the deeplink information.

5. The method according to any one of claims 1 to 4, wherein after the determining, by the terminal device, that a target application corresponding to the deeplink is not installed in the terminal device, the method further comprises:
displaying, by the terminal device, a second interface, wherein the second interface comprises an option used to trigger downloading of the installation file of the target application; and
the sending, by the terminal device, a download request to a download server comprises:
sending, by the terminal device, the download request to the download server when receiving an operation of triggering downloading of the installation file of the target application by the user on the second interface.

6. The method according to any one of claims 1 to 5, wherein the receiving, by a terminal device, an operation of accessing a deeplink by a user comprises:
receiving, by the terminal device, the operation of accessing the deeplink by the user on a first interface, wherein
the first interface comprises any one of the following interfaces: an instant messaging interface, a notification message interface, an SMS message interface, an application message interface, an activity/advertisement interface, an email interface, and an identification code interface.

7. The method according to any one of claims 1 to 6, wherein the installing and starting up, by the terminal device, the target application comprises:
installing, by the terminal device, the target application, and automatically starting up the target application after the target application is installed; or
installing, by the terminal device, the target application, and starting up, based on an operation of starting up the target application by the user, the target application after the target application is installed.

8. The method according to claim 1, wherein the method further comprises:
receiving, by the terminal device, an operation of accessing a second deeplink by the user; and
determining, by the terminal device, that a second target application corresponding to the second deeplink is installed in the terminal device, and displaying, by the terminal device, a corresponding second target application page based on the deeplink.

9. A terminal device, wherein the terminal device comprises:
a sensor, configured to detect an input operation of a user;
a communication interface, configured to send and receive a signal;
a memory, configured to store computer program instructions; and
a processor, configured to execute the instructions, so that a communication node performs the method according to any one of claims 1 to 8.

10. A computer-readable storage medium, wherein the computer-readable storage medium stores computer-executable instructions; and when the computer-executable instructions are executed by a processing circuit, the method according to any one of claims 1 to 8 is implemented.

11. A chip system, wherein the chip system comprises a processing circuit and a storage medium, and the storage medium stores instructions; and when the instructions are executed by the processing circuit, the method according to any one of claims 1 to 8 is implemented.
